Europäisches Patentamt

European Patent Office

Office européen des brevets

(11) Veröffentlichungsnummer: **0 094 372**
**A2**

(12) **EUROPÄISCHE PATENTANMELDUNG**

(21) Anmeldenummer: 83890069.4

(22) Anmeldetag: 02.05.83

(51) Int. Cl.³: **F 16 K 31/00**

(30) Priorität: 07.05.82 AT 1801/82

(43) Veröffentlichungstag der Anmeldung: 16.11.83
Patentblatt 83/46

(84) Benannte Vertragsstaaten: CH DE FR IT LI

(71) Anmelder: Herz Armaturen Gesellschaft m.b.H.,
Herzgasse 64-66, A-1100 Wien (AT)

(72) Erfinder: Weigl, Erwin, Julius Raabstrasse 18/21/8,
A-2345 Brunn/Geb. (AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien (AT)

(54) Thermostatventil für Warmwasser-Heizkörper.

(57) Das Handrad (6) eines Thermostatventils weist ein Verstellglied (18) für die Absenkung der Temperatur ohne Verstellung des Handrades (6) auf. Das Verstellglied (18) ist in den Übertragungsweg zwischen Handrad (6) und einem temperaturabhängigen Ausdehnungssystem (7) eingeschaltet. Das temperaturabhängige Ausdehnungssystem (7) wird durch eine Feder (8) in Anlage an dem Verstellglied (18) gehalten. Das Verstellglied (18) ist im Handrad (6) abgestützt und das Handrad (6) betätigt unter Zwischenschaltung des temperaturabhängigen Ausdehnungssystems (7) einen Ventilkegel des Ventils.

- 1 -

## Thermostatventil für Warmwasser-Heizkörper

Die Erfindung betrifft ein Thermostatventil für Warmwasser-Heizkörper, mit einem mittels eines für die Solltemperaturwahl dienenden Handrades über ein Gewinde gegenüber einem Ventilsitz verstellbaren Ventilkegel, einem im Übertragungsweg zwischen Handrad und Ventilkegel angeordneten temperaturabhängigen Ausdehnungssystem sowie einer eine vorgespannte Feder aufweisenden Überdrucksicherung.

Der Einsatz derartiger Thermostatventile bei einer Zentralheizung oder Etagenheizung erlaubt eine individuelle Temperierung einzelner Räume und dadurch eine sinnvolle Begrenzung des Energiebedarfes für die Heizungsanlage. Es ist nun einerseits in manchen Räumen nicht über den ganzen Tag eine gleich hohe Temperatur erforderlich oder erwünscht und anderseits soll vermieden werden, daß während des Lüftens eines Raumes die Thermostatventile der in diesem Raum befindlichen Heizkörper voll öffnen und dadurch eine Energieverschwendung verursachen. Für den letzteren Fall ist bereits ein Lösungsvorschlag bekannt, wonach mit einem Fensterflügel ein mechanischer Fühler gekoppelt ist, der über eine Hydraulikleitung mit dem Thermostatventil eines diesem Fenster zugeordneten Warmwasser-Heizkörpers in Verbindung steht und das Ventil bei geöffnetem Fensterflügel schließt. Dieser bekannte Lösungsvorschlag erfordert eine zusätzliche Installation am Fensterrahmen und ermöglicht lediglich ein selbsttätiges Absperren des Heizkörpers bei geöffnetem Fenster.

Die Erfindung zielt darauf ab, bei gleichbleibender Einstellung des Handrades des Thermostatventils eine willkürliche Änderung der gewählten Solltemperatur herbeiführen zu können. Zur Lösung dieser Aufgabe besteht die Erfindung bei einem Thermostatventil der eingangs angegebenen Art im wesentlichen darin, daß zur willkürlichen Änderung der gewählten Solltemperatur bei gleichbleibender Einstellung des Handrades, insbesondere für eine vorübergehende Temperaturabsenkung, im Übertragungsweg zwischen Handrad und temperaturabhängigem Ausdehnungssystem ein von außen betätigbares Verstellglied vorgesehen ist. Es erschiene zunächst naheliegend, eine vorübergehende Änderung der Solltemperatur, beispielsweise eine Temperaturabsenkung von etwa 5° C über Nacht, einfach durch Verstellen des Handrades vorzunehmen. Eine solche Vorgangsweise hat aber mehrere Nachteile. Erstens muß man sich beim Verstellen des Handrades die vorherige Einstellung merken, um beispielsweise am nächsten Morgen wieder die richtige Einstellung für die gewünschte Tagestemperatur herzustellen. Zweitens sind die Handräder von Thermostatventilen üblicherweise schwergängig verdrehbar, u. zw. aus gutem Grund, um nämlich ein unbeabsichtigtes Verstellen des Handrades, beispielsweise beim Staubwischen, nach Möglichkeit zu verhindern. Es ist daher für die Verstellung des Handrades eines Thermostatventils ein verhältnismäßig großer Kraftaufwand erforderlich, der den Benützer der Heizungsanlage von einer häufigen Verstellung der Thermostatventile abhalten würde. Diese Nachteile sind durch die erfindungsgemäße Konstruktion beseitigt. Die Erfindung bietet weiters den Vorteil, daß unabhängig vom Absolutwert der mit dem Handrad gewählten Solltemperatur durch den für das von außen betätigbare Verstellglied vorzusehenden Verstellbereich die Solltemperatur um einen vorbestimmten Differenzbetrag geändert werden kann, so daß der Benützer der Heizungsanlage beim Umstellen keine besondere Skala abzulesen braucht.

Zweckmäßig ist die Anordnung so getroffen, daß das Verstellglied kraftschlüssig zur Druckübertragung zwischen dem Handrad und dem temperaturabhängigen Ausdehnungssystem angeordnet ist und daß das temperaturabhängige Ausdehnungssystem von einer vorzugsweise im Handrad abgestützten Rückholfeder gegen das Verstellglied gedrückt gehalten ist.

Dadurch ist sichergestellt, daß die mechanisch zusammenwirkenden Bauteile des Thermostatventils ständig in Berührung miteinander gehalten sind und eine über das Verstellglied eingetragene Hubänderung in vollem Ausmaß wirksam ist.

Eine günstige Ausführungsform des erfindungsgemäßen Thermostatventils weist das Merkmal auf, daß das Verstellglied einen Gewindebolzen aufweist, der eine Gewindebohrung in der Stirnseite des Handrades durchsetzt, an seinem äußeren Ende einen Drehknopf trägt und mit seinem inneren Ende am temperaturabhängigen Ausdehnungssystem anliegt. Auf diese Weise ergibt sich eine technisch einfache, leicht zu bedienende und gefällige aussehende koaxiale Anordnung von Handrad und Drehknopf des Verstellgliedes, wobei außerhalb des Umfanges des Drehknopfes an der Stirnseite des Handrades eine einfache Skala oder Merksymbole, beispielsweise ein Sonnensymbol für Tagbetrieb und ein Mondsymbol für Nachtbetrieb, vorgesehen sein können.

Eine andere Ausführungsmöglichkeit des erfindungsgemäßen Thermostatventils besteht darin, daß das Verstellglied einen Betätigungsstift aufweist, der im Handrad in der Nähe von dessen Stirnseite quer zu dessen Achse axial verschiebbar angeordnet ist und im Bereich der Achse des Handrades eine mit seiner eigenen Achse einen spitzen Winkel einschließende Keilfläche trägt, die mit einer an der vom Ventilkegel abgewendeten Stirnfläche des temperaturabhängigen Ausdehnungssystems vorgesehenen komplementären Keilfläche zusammenwirkt, und daß vorzugsweise der Betätigungsstift wenigstens für seine beiden Endstellungen mit Rastausnehmungen zum Zusammenwirken mit einer im Handrad angeordneten federbelasteten Rastkugel versehen ist. Da das Handrad des Thermostatventils normalerweise nie verstellt zu werden braucht, ergeben sich für den Benützer der Heizungsanlage zwei charakteristische Stellen am Handrad, an

- 4 -

welchen jeweils ein Ende des Betätigungsstiftes herausragt. Die Umstellung kann somit erfolgen, ohne daß der Benützer genau hinzusehen braucht. Zusätzlich können an den Stellen des Handrades, an welchen die Enden des Betätigungsstiftes herausragen, einprägsame Symbole vorgesehen sein oder es können die beiden Enden des Betätigungsstiftes verschiedenfarbig ausgebildet sein.

Die Erfindung wird nachfolgend anhand zweier in der Zeichnung dargestellter Ausführungsbeispiele näher erläutert, wobei in jeder der beiden Zeichnungsfiguren ein Thermostat eines Heizkörperventils im Axialschnitt dargestellt ist.

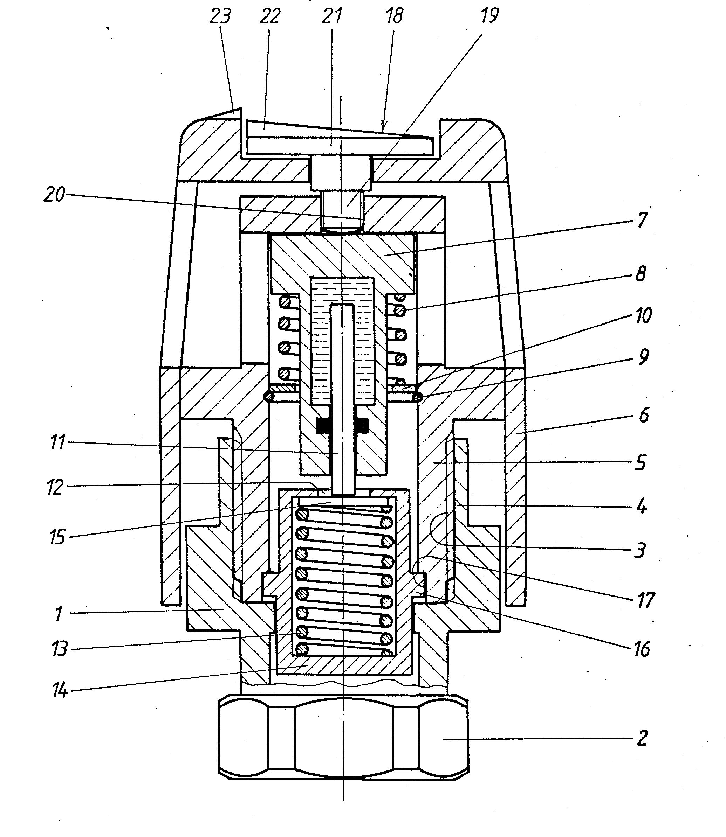

Der in Fig. 1 dargestellte Thermostat für ein Heizkörperventil weist ein Gehäuse 1 auf, welches mittels einer Mutter 2 am Gehäuse des Heizkörperventils zu befestigen ist. Das Gehäuse weist ein Innengewinde 3 auf, in welches ein mit einem Außengewinde 4 versehener zylindrischer Stutzen 5 eines Handrades 6 einschraubbar ist, wodurch das Handrad 6 gegenüber dem Gehäuse 1 in axialer Richtung verstellbar ist.

Im hohl ausgebildeten Handrad 6 ist axial ausgerichtet ein flüssigkeitsgefülltes temperaturabhängiges Ausdehnungssystem 7 angeordnet, dessen axiale Länge über alles eine Funktion der Umgebungstemperatur ist. Das Ausdehnungssystem 7 ist mittels einer an seinem verdickten Kopf angreifenden Rückholfeder 8 gehalten, welche sich an einer im Handrad 6 mittels eines Sprengringes 9 gesicherten ringförmigen Unterlegscheibe 10 abstützt. Ein als Tauchkolben wirkender und an einem Ende aus dem Ausdehnungssystem 7 herausragender zylindrischer Stift 11 durchsetzt eine stirnseitige Öffnung 12 einer eine vorgespannte Feder 13 enthaltenden Überdrucksicherung 14 und liegt an einer Platte 15 an, die im hohlzylindrischen Gehäuse der Überdrucksicherung lose aufgenommen und von der vorgespannten Feder 13 gegen die Öffnung 12 gedrückt ist. Die Überdrucksicherung 14 überträgt bei geöffnetem

- 5 -

Heizkörperventil alle Bewegungen des Handrades 6 und des temperaturabhängigen Ausdehnungssystems 7 auf den nicht dargestellten Ventilkegel des Heizkörperventils und nimmt weitere vom zylindrischen Stift 11 übertragene Bewegungen erst dann elastisch auf, wenn der Ventilkegel auf dem Ventilsitz des Heizkörperventils aufsitzt und somit das Heizkörperventil geschlossen ist, wobei Beschädigungen des Heizkörperventils und insbesondere des Thermostaten durch übermäßig hohe Kräfte vermieden sind. Das Gehäuse der Überdrucksicherung 14 weist etwa bei seiner halben axialen Länge einen Ringflansch 16 auf, der in einer inneren Ausdrehung 17 beim Ende des zylindrischen Stutzens 5 des Handrades 6 begrenzt axial beweglich ist. Diese axiale Beweglichkeit reicht einerseits für die Thermostatsteuerung aus und stellt anderseits sicher, daß das Heizkörperventil unabhängig von der durch die Umgebungstemperatur bedingten wirksamen axialen Länge des Ausdehnungssystems 7 durch Drehen des Handrades 6 in Schließrichtung völlig geschlossen werden kann.

Das Handrad 6 weist bei seinem das Gehäuse 1 übergreifenden freien Rand eine Zahlenskala auf, welche aus Temperaturangaben oder einfach nur aus irgend welchen Kennzahlen oder -buchstaben bestehen kann. An einer Stelle des unter dem Rand des Handrades 6 herausragenden Teiles des Gehäuses 1 ist eine Marke, beispielsweise ein erhabener Pfeil oder Strich, vorgesehen.

Für eine Veränderung der gewählten Solltemperatur um einen kleinen Betrag bei gleichbleibender Einstellung des Handrades 6 ist ein Verstellglied 18 vorgesehen, das einen Gewindebolzen 19 aufweist, der eine Gewindebohrung 20 in der Stirnseite des Handrades 6 durchsetzt und an seinem äußeren Ende einen Drehknopf 21 trägt. Das freie innere Ende des Gewindebolzens 19 liegt an der vom Heizkörperventil abgewendeten Stirnfläche des temperaturabhängigen Ausdehnungssystems 7 an

und verstellt beim Verdrehen des Drehknopfes 21 das Ausdehnungssystem 7 in ähnlicher Weise wie dies bei einer Verdrehung des Handrades 6 der Fall ist. Der Drehknopf 21 ist an seiner nach außen weisenden Stirnfläche mit einem erhabenen Pfeil oder Strich 22 versehen, welcher auf eines von wenigstens zwei Merkzeichen 23 an der Stirnseite des Handrades 6 ausrichtbar ist. Zweckmäßig ist für den Gewindebolzen 19 eine Gewindesteigung gewählt, mit der sich über eine halbe Umdrehung des Verstellgliedes 18 eine Änderung der Solltemperatur um etwa 5$^{\circ}$ C ergibt.

Auf diese Weise ist beispielsweise in einem Wohnraum lediglich durch Verdrehen des Verstellgliedes 18 bei gleichbleibender Einstellung des Handrades 6 am Abend eine Absenkung der Nachttemperatur um etwa 5$^{\circ}$ C einstellbar, die am Morgen ohne umständliche Kontrolle der Einstellung des Handrades 6 auf einfache und sichere Weise wieder rückgängig gemacht werden kann.

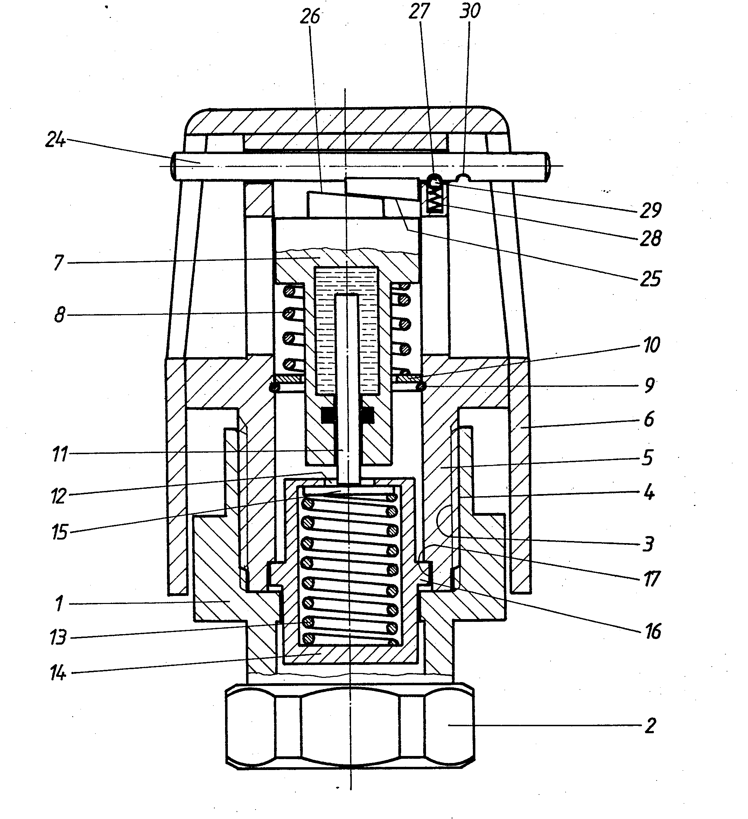

Bei dem in Fig. 2 dargestellten Ausführungsbeispiel sind gleiche Teile wie in Fig. 1 mit den gleichen Bezugszahlen 1 bis 17 bezeichnet, wobei diese Teile auch die gleiche Funktion wie beim ersten Ausführungsbeispiel haben und sich eine nochmalige Beschreibung derselben erübrigt. Unterschiedlich gegenüber Fig. 1 ist beim zweiten Ausführungsbeispiel das Verstellglied ausgebildet. Das Verstellglied weist einen Betätigungsstift 24 auf, der im Handrad 6 in der Nähe von dessen Stirnseite quer zu dessen Achse axial verschiebbar angeordnet ist und im Bereich der Achse des Handrades eine mit seiner eigenen Achse einen spitzen Winkel einschließende Keilfläche 25 trägt, die mit einer an der vom Heizkörperventil abgewendeten Stirnfläche des temperaturabhängigen Ausdehnungssystems 7 vorgesehenen komplementären Keilfläche 26 zusammenwirkt. Der Betätigungsstift 24 weist für seine in Fig. 2 gezeichnete Tagesstellung eine Rastausnehmung 27 auf, in welche eine von einer Feder 28 belastete Rastkugel 29 teilweise eintritt und somit den Betätigungsstift 24 gegen unbeabsichtigtes Verstellen sichert. Für die eine Temperaturabsenkung bewirkende Nachtstellung ist eine weitere Rastausnehmung 30 am Betätigungsstift 24 vorgesehen. Zur Kennzeichnung der beiden Funktionsstellungen des Verstellgliedes für den Benützer können entweder entsprechende Hinweise oder Symbole am Handrad 6 vorgesehen sein oder es kann beispielsweise das in der Tagstellung des Betätigungsstiftes 24 herausragende Ende hell gefärbt und das in der Nachtstellung herausragende Ende des Betätigungsstiftes 24 dunkel gefärbt sein.

- 8 -

Patentansprüche

1. Thermostatventil für Warmwasser-Heizkörper, mit einem mittels eines für die Solltemperaturwahl dienenden Handrades (6) über ein Gewinde (3, 4) gegenüber einem Ventilsitz verstellbaren Ventilkegel, einem im Übertragungsweg zwischen Handrad (6) und Ventilkegel angeordneten temperaturabhängigen Ausdehnungssystem (7) sowie einer eine vorgespannte Feder (13) aufweisenden Überdrucksicherung (14), dadurch gekennzeichnet, daß zur willkürlichen Änderung der gewählten Solltemperatur bei gleichbleibender Einstellung des Handrades (6), insbesondere für eine vorübergehende Temperatursenkung, im Übertragungsweg zwischen Handrad (6) und temperaturabhängigem Ausdehnungssystem (7) ein von außen betätigbares Verstellglied (18) vorgesehen ist.

2. Thermostatventil nach Anspruch 1, dadurch gekennzeichnet, daß das Verstellglied (18) kraftschlüssig zur Druckübertragung zwischem dem Handrad (6) und dem temperaturabhängigen Ausdehnungssystem (7) angeordnet ist und daß das temperaturabhängige Ausdehnungssystem (7) von einer vorzugsweise im Handrad (6) abgestützten Rückholfeder (8) gegen das Verstellglied gedrückt gehalten ist.

3. Thermostatventil nach Anspruch 1 oder 2, dadurch gekennzeichnet, daß das Verstellglied (18) einen Gewindebolzen (19) aufweist, der eine Gewindebohrung (20) in der Stirnseite des Handrades (6) durchsetzt, an seinem äußeren Ende einen Drehknopf (21) trägt und mit seinem inneren Ende am temperaturabhängigen Ausdehnungssystem (7) anliegt.

4. Thermostatventil nach Anspruch 1 oder 2, dadurch gekennzeichnet, daß das Verstellglied einen Betätigungsstift (24) aufweist, der im Handrad (6) in der Nähe von dessen Stirnseite quer zu dessen Achse axial verschiebbar angeordnet ist und im Bereich der Achse des Handrades eine mit seiner eigenen Achse einen spitzen Winkel einschließende Keilfläche (25) trägt, die mit einer an der vom Ventilkegel abgewendeten Stirnfläche des temperaturabhängigen Ausdehnungssytems (7) vorgesehenen komplementären Keilfläche (26) zusammenwirkt, und daß vorzugsweise der Betätigungsstift wenigstens für seine beiden Endstellungen mit Rastausnehmungen (30) zum Zusammenwirken mit einer im Handrad (6) angeordneten federbelasteten Rastkugel (29) versehen ist.

*Fig. 1*

0094372

Fig. 2